# EUROPEAN PATENT APPLICATION

(11) **EP 4 390 817 A1**
(43) Date of publication of application: **26.06.2024**
(21) Application number: 22020622.1
(22) Date of filing: 22.12.2022
(51) Int. Cl.: G06Q 20/20

(54) **METHOD FOR IDENTIFYING A USER**

(71) Applicant: Linde GmbH, 82049 Pullach (DE)
(72) Inventor: Slaby, Oliver, 82049 Pullach (DE); Kireev, Vitalij, 82049 Pullach (DE); Nowagk, Michael, 82049 Pullach (DE); Kühn, Alexander, 82049 Pullach (DE); Rönsch, Renato, 82049 Pullach (DE)
(74) Representative: Imhof, Dietmar

(57) **Abstract**

The invention relates to a method for identifying a user of a local device (4, 6, 7), wherein an identification code provided on or at the local device (4, 6, 7) is read (S100) by a mobile device (11), wherein the local device (4, 6, 7) is configured to perform an action. Afterwards, a request message (M1) is sent by the mobile device (11) to a central server (12), wherein the request message includes at least user information, local device information and a request to perform an action by means of the local device (4, 6, 7). Based on the request message (M1), it is determined (S120) by the central server (12), whether the user is permitted to cause the local device (4, 6, 7) to perform the action. Then an action message (M2) is sent (S130) from the central server (12) to a local server (10) configured for controlling the local device (4, 6, 7), based on the result of the determination, wherein the action message (M3) indicates whether the user is permitted to cause the local device (4, 6, 7) to perform the action. Finally, the local server (10) controls (S140) the local device (4, 6, 7) to perform the action based on the action message (M3) sent by the central server (12).

## Description

The invention relates to methods for identifying a user of a local device, a computing unit, a corresponding computer program code, a computer-readable storage medium, and a production plant.

### Background

Typically, identification cards or RFID (radio frequency identification) keys can be used for access control or to perform certain tasks in process or production plants where gases or liquified gases are filled into mobile reservoirs, i.e. tanks of a vehicle like a truck (road tankers), train (rail tankers) or ship. This requires a card reader provided at each point of interested, i.e. each local device such as a gate, a scale and a filling station, and a managed card for each person and vehicle permitted to perform actions on or by the local device.

A system like this has several drawbacks, such as requiring hardware of one card reader at each point of interest as well as the required wiring of the card readers, which are quite cost intensive and require maintenance. To this cost, the costs of acquiring, managing and distributing the cards to each driver is added.

Further, a handout of the identification cards or keys can, for example, not be done, when a new driver stands in front of the process plant gate during midnight. Therefore, the current solution is not flexible. Additionally, as the handing out and managing of the cards is tedious, operators of the vehicles, i.e. the users of the local devices, often pass their cards to other operators which poses security risks.

In view of the above, an object of the invention is to provide an improved way for identifying a user, preferably one that is more flexible and secure as well as less costly.

### Disclosure of the invention

This object is solved by methods for identifying a user, a computing unit and a production plant with the features of the independent claims. Advantageous embodiments and developments are subject of the dependent claims as well as the following description.

The present invention relates to a method for identifying a user of a local device, such as a gate, scale or filling station at a production plant. The method comprises, in a first step, reading, using a mobile device like a smartphone, in particular by the camera of the mobile device, an identification code provided on or at a local device. The local device is configured to perform an action like opening and/or closing the gate. The mobile device then sends a request message to a central server, wherein the request message includes at least user information, local device information and a request to perform an action by means of the local device. An application software or app can be installed in the mobile device, which can be activated or used, e.g., only after registration and/or verification of the user with a master data manager or the like.

Afterwards, the central server determines, based on the request message, whether the user is permitted (or has the permission) to cause the local device to perform the action. Then, the central server sends, based on the result of the determination, an action message, indicating whether the user is permitted to cause the local device to perform the action, to a local server controlling the local device and the local server controls the local device to perform the action based on the action message sent by the central server.

The code provided on or at - or printed on - the local device can, for example, be a matrix barcode, preferably a quick response (QR) code, a micro QR code, a secure QR (SQR) code, a frame QR code, a High Capacity Colored 2-Dimensional (HCC2D) code or a Just Another Barcode (JAB) code.

Alternatively, a RFID-tag can be provided at the local device, which can be read by an NFC (near field communication)-chip of a mobile device. Thereby, the security of the overall system can be improved as the RFID-tag can not be copied, i.e. by merely taking a photograph of the code. Thereby, detertmining the location of the mobile device and comparing it to the location of the local device, i.e. GEO-fencing, is not required.

Further, the request sent from the mobile device to the central server can, for example, be sent via a cellular connection, preferably via the World Wide Web. By involving Word Wide Web into the communication path, the additional benefit arises that maintenance, in particular of the user register, and management of the system can be controlled from a central location, which further reduces the cost of the overall system.

Hence, as no card readers are required, wiring and maintaining of card readers will no longer be necessary. Further, as essentially anyone owns and uses a mobile device like a smartphone nowadays, it will not be required to spend money for providing these to the persons and additionally, no cards must be acquired, managed, and handed out, which further reduces the operation cost of the entire system required for user identification. Additionally, the system becomes more flexible, since the mobile device of a user of the local device, which is in many cases the same person as the operator of the vehicle onto which the mobile reservoir that should be filled is mounted, for example, can be activated for this purpose remotely and on the fly, i.e. without another person having to be present at the local device. Further, this reduces the need to hand over the activated mobile devices from one user to another and hence, the overall security of the system can be improved.

Hence, the flexibility, security and cost of a system for identifying a user requesting a local device to perform an action can be improved by the proposed method.

In another embodiment of the invention, the method further requires, before the reading of the identification code or before sending the request message to the central server, that the user, i.e. the user of the local device, identifies himself on the mobile device. Such identification can be performed, for example, by face recognition, fingerprint scanning or entering a passcode that was previously set by the user.

Hence, even in case of loss of the mobile device, unauthorized use of the mobile device for identification and, thus, actions to be performed by the local devices, can be prevented and thus, the security of the identification system is greatly improved.

According to another embodiment of the invention the central server sends a permission message to the mobile device that indicates the result of the determination and on the mobile device it is then indicated, whether the action will be performed based on the result of the determination received in the permission message.

Thereby the user of the local device will directly be informed whether the request is valid or further authorization might be necessary. Additionally, a message can be sent from the central server or the local server to a management facility indicating that a request by a user without permission has been made and further security measures need to be taken. Thereby, the flexibility and security of the overall system can be improved.

In another embodiment of the invention, the user information includes one or more of information about the user of the mobile device, information about a vehicle operated by the user, information about the mobile device and information about the location of the mobile device.

In a further embodiment of the invention, the device information includes one or more of information about a type of the local device, information about a location of the local device and information about actions which the local device is configured to perform.

In particular by using GEO-Fencing technologies, the location of the mobile device and the local device, the security of the system can be improved, as it is no longer possible to, for example, take a photo of the barcode provided on or at a local device for later use. Further, the information about the user and the local device can be used to securely identify a user and his permissions and deny a request if the user is not permitted to request an action to be performed by means of the local device.

According to a further embodiment of the invention, determining whether the user is permitted to cause the local device to perform the action further includes comparing, by the central server, the user information with a list of information about users that are permitted to cause the local device to perform the action and determining, based on the result of the comparison, whether the user is permitted to cause the local device to perform the action. For example, it can be determined that the user is not permitted to cause the local device to perform the action, when the comparison yields, as a result, that the user identified by the user information is not on the list of users that are permitted to cause the local device to perform the action. In contrast, if the user identified by the user information is on the list, it can be determined that the user is permitted to cause the local device to perform the action.

In this way, the method for identifying a user can be easily implemented and in particular maintenance of the system merely requires updating the list of users and their permissions, whereby the system is more flexible and less cost intensive.

In an embodiment of the invention, the local device is or is part of or is assigned to one of a gate, a scale or a filling station, in particular a filling station for filling a medium, in particular a fluid or liquified gas into a mobile storage reservoir, in particular of a vehicle like a truck (or road trailer), a train (or railcar) or a ship. The actions performed by the local device are, for example, opening or closing the gate, creating a weight bill indicating the weight of the vehicle on the scale or starting or stopping the filling of the mobile reservoir by the filling station.

Hence, the system is suitable to be used for the filling process of trucks. Alternatively, the method could also be used to determine the coming and leaving of employees into a building, i.e. as a time management system by providing an identification code at the entrance of a building that needs to be scanned when entering and leaving the building.

According to an embodiment of the invention, for identifying a user of a local device, a central server receives a request message from a mobile device, wherein the request message has been generated based on a reading of an identification code provided on or at the local device, wherein the request message includes at least user information, local device information and a request to perform an action by means of the local device. Subsequently, the central server determines, based on the request message, whether the user is permitted to cause the local device to perform the action and sends, based on the result of the determination, an action message, indicating whether the user is permitted to cause the local device to perform the action, to a local server that performs the action based on the sent message.

In yet another embodiment of the invention, for identifying a user of a local device, a local server configured to control the local device receives, from a central server, an action message, indicating whether a user is permitted to cause the local device to perform the action and controls the local device to perform the action, based on the message sent by the central server.

According to another embodiment of the invention, for identifying a user of a local device, a mobile device like a smartphone reads, in particular with a camera of the mobile device, an identification code provided on or at the local device, wherein the local device is configured to perform an action. The mobile device sends a request message to a central server, wherein the request message includes at least user information, local device information and a request to perform an action by means of the local device.

Thereby, the same advantages as stated above with regard to the complete method for identifying a user can be achieved by the method steps performed by the individual devices, i.e. the local server, the central server and the mobile device.

A computing unit or a computing system according to the invention, is configured, in particular programmatically, to execute a method according to any of the previous aspects. The computing unit can be or comprised in the local server, the central server, or the mobile device, for example. The computing system can comprise several of such computing units, e.g. the ones being or comprised in local server, the central server, and the mobile device.

The implementation of a method according to the invention in the form of a computer program code or computer program product with program code for carrying out all method steps is also advantageous, since this causes particularly low costs, especially if an executing control unit is still used for further tasks and is therefore present anyway. Finally, a machine-readable storage medium is provided with a computer program stored thereon as described above. Suitable storage media or data carriers for providing the computer program are, in particular, magnetic, optical and electrical memories, such as hard disks, flash memories, EEPROMs, DVDs and the like. It is also possible to download a program via computer networks (Internet, intranet, etc.). Such a download can take place wired or wirelessly (e.g. via a WLAN network, a 3G, 4G, 5G or 6G connection, etc.).

A further embodiment of the invention relates to a production plant like a plant for air separation, a gas production plant or the like. The production plant comprises a local server and one or more local devices connected to the local server. The local server is configured to perform the method mentioned above, wherein a unique identification code that can be read by a mobile device is provided on or at each local device and each local device is configured to perform an action.

Thereby, the same advantages as for the method above can be achieved.

Further advantages and aspects of the invention will be apparent from the accompanying drawings and their description.

The invention is schematically illustrated by means of embodiments in the drawing and is described in the following with reference to the drawing.

### Short description of the drawings

Figure 1 shows a block diagram of a filling process;
Figure 2 shows a block diagram of a workflow for identifying a user that is not part of the present invention;
Figure 3 shows a block diagram of a workflow for identifying a user according to one aspect of the present invention; and
Figure 4 shows a flowchart of the method for identifying a user according to one aspect of the present invention.

### Embodiments of the invention

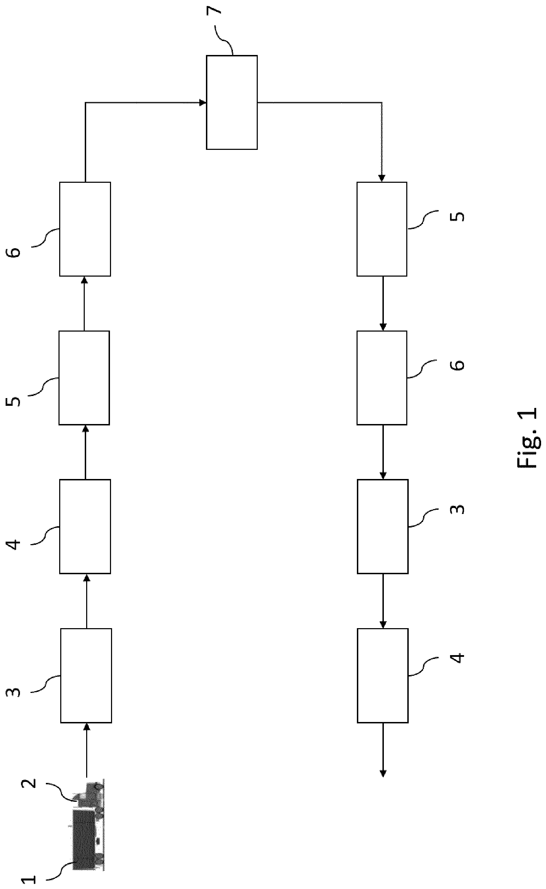

Figure 1 shows a schematic view of a filling process in an exemplary embodiment. Therein, a mobile reservoir 1 mounted on a vehicle 2, by means of example shown as the tank of a truck, is transferred from a customer to a gate column 3 of a production plant, where the operator of the vehicle 2, which is the user of the local device, can open a gate 4 through which the vehicle 2 is entered into the production plant. In a next step, the vehicle 2 in its original state (i.e., before filling) is weighed on a scale 5, which the driver can operate from the weighing station 6, to determine a base point for estimating an amount of medium filled into the tank and generate a weighing bill. Afterwards, the mobile reservoir 1 is brought to a filling station 7 with a storage reservoir (not shown) and is filled with the desired medium. In the filling station 7, analysis instruments (not shown) are present to determine a purity of the medium and, based on the measurements of, e.g. a flowmeter, the volume of medium filled into the mobile reservoir 1. Afterwards, the truck is driven onto a scale 5, which the operator of the vehicle 2 can operate from the weighing station 6, again, to determine the final weight of the vehicle 2, i.e. of the mobile reservoir 1, and thereby determine the amount of medium filled into the mobile reservoir 1. Next, the mobile reservoir 1 is moved out of the process plant through the gate 3 opened by the operator at the gate column 4 and is transported to a customer, where the mobile reservoir 1 can be depleted and another storage reservoir can be filled.

At each stop, i.e., the gate, the scale and the filling station for example, the user has to provide identification, which included, up to now, using his ID-card or RFID key. Simultaneously, on each of these local devices, a card reader had to be provided and maintained. Hence, every user has be to provided with a card and the card readers at every local device have to be put up, wired and maintained, which leads to an inflexible, insecure and costly system. This can be improved within the present invention as will be described in the following.

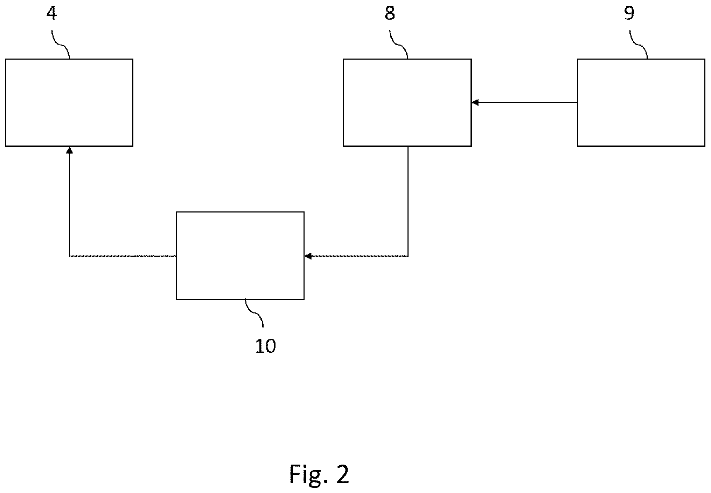

Figure 2 shows a block diagram of a communication workflow of an identification system using an ID-card/RFID key 9 and a gate 4 as a local device. The user, i.e. the operator of the truck has to scan the identification card 9 at a card reader 8 of the local device. The card reader 8 then sends a request message to a local server 10, which determines whether the user is permitted to cause the local device 4 to perform the action, i.e. whether the user is permitted to cause the gate 4 to be opened and/or closed. Based on the determination, i.e. if the user is permitted to cause the local device 4 to perform the action, the local server performs the action by means of the local device 4, for example, opens the gate 4. If the user is not permitted to cause the local device to perform the action, the local server 10 will not perform the action.

Another disadvantage of this system is that each local server 10 has to be individually updated with the users, respectively the identification used by the users, and their permission, i.e. which actions they are allowed to perform/request.

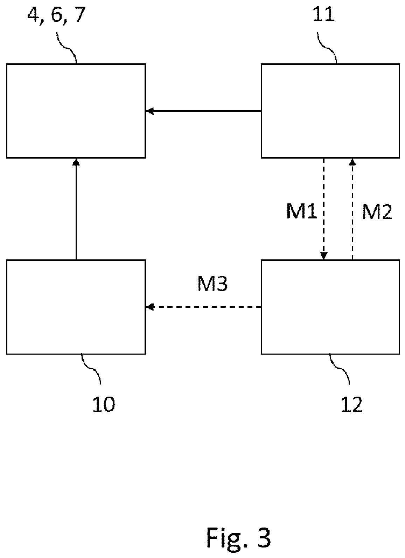

Figure 3 shows a block diagram of a workflow for identifying a user according to an embodiment of the present invention. In contrast to the workflow shown in Figure 2, a mobile device 11, reads an identification code positioned on the local device 4, 6, 7, which can for example be a gate 4, a scale 6 or a filling station 7, and sends a request message M1 to a central server 12. The request message M1 contains information about the user/mobile device, about the local device and a request to cause the local device to perform an action. The central server 12 checks, if the user is permitted to cause the local device to perform the action based on the received information and sends an action message M3 to the local server 10 that controls the local device 4, 6, 7. The local server 10 then controls the local device 4, 6, 7 based on the action message.

Further, the central server 12 may send a permission message M2 to the mobile device 11 indicating the result of the determination of the permission of the user. Based on the permission message M2, the mobile device 11 indicates to the user, whether the action will be performed based on the result of the determination received in the permission message. If the user has permission to cause the local device 4, 6, 7 to perform the requested action, the mobile device 11 might show a message on its display saying that the specific action will be performed. If, however, the user does not have permission to cause the local device 4, 6, 7 to cause the action, the mobile device 11 will show a message indicating that permission is not granted. In this case, the central server 12 or the local server 11 may further send a message to a management facility indicating that a request by a user without permission has been made.

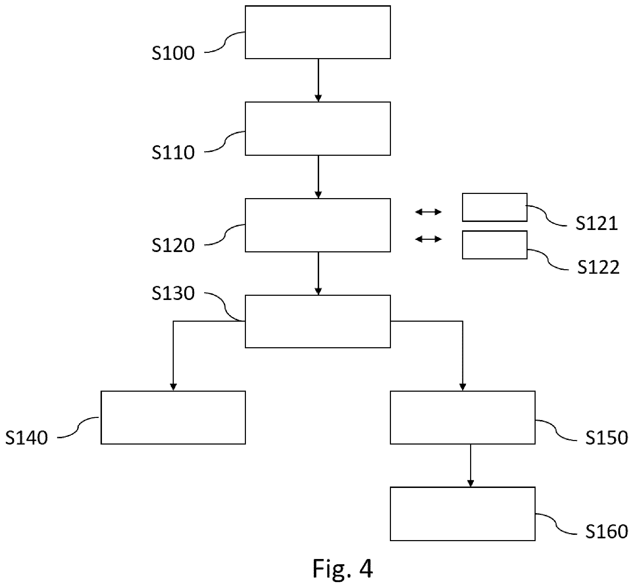

Figure 4 shows a flowchart of the method for identifying a user according to an embodiment of the present invention.

At the start, the user has to identify himself on the mobile device, for example via face recognition, fingerprint scanning or providing a pre-set passcode. Alternatively, this step can also be performed after an identification code provided on or at a local device 4, 6, 7 is read by the mobile device 11 and before a message is sent from the mobile device 11 to the central server 12.

An identification code provided on or at a local device 4, 6, 7 is read by the mobile device 11 (step S100), in particular by using the camera of the mobile device 11 such as a smartphone. The local device 4, 6, 7 is controlled by the local server 10 and configured to perform an action (based on being controlled by the local server 10) . The local device 4, 6, 7 can, for example, be any of a gate 4, a scale 6 or a filling station 7, in particular a filling station for filling a medium, in particular a fluid or liquified gas, into a mobile reservoir 1 of a vehicle 2, in particular of a truck, a train or a ship, as has been explained above.

In a step S110, the mobile device 11 sends a request message M1 to a central server 12. The request message M1 includes at least user information, local device information and a request to perform an action by means of the local device 4, 6, 7. The request is, for example, a request to open or close the gate 4, create a weight bill indicating the weight of the vehicle 2 on the scale 6, start or stopp the filling of the mobile reservoir 1 by the filling station 7. The user information includes any of information about the user of the mobile device 11, information about a vehicle 2 driven by the user, information about the mobile device 11 and/or information about the location of the mobile device 11, while the local device information includes any of information about a type of the local device 4, 6, 7, i.e. that the local device 4, 6, 7 is a gate 4, a scale 6 or a filling station 7, information about a location of the local device 4, 6, 7 and/or information about actions the local device 4, 6, 7 is configured to perform.

Afterwards, the central server 12 determines (step S120), based on the request message M1, whether the user is permitted to cause the local device 4, 6, 7 to perform the action. This determination can in particular be executed by comparing (step S121), by the central server 12, the user information with a list of information about users that are permitted to cause the local device 4, 6, 7 to perform the action; and determining (step S122), based on the comparison, whether the user is permitted to cause the local device 4, 6, 7 to perform the action.

However, this is merely an exemplary way of determining the permission of the user and any other solution of implementing the determination of permission of a user is also viable.

In a next step (S130), the central server 12 sends, based on the result of the determination, an action message M3, indicating whether the user is permitted to cause the local device 4, 6, 7 to perform the action, to a local server 10 controlling the local device 4, 6, 7. If the user is permitted to cause the local device 4, 6, 7 to perform the action, the central server 12 sends a message to the local server 10 that controlls the local server 10 to perform the action by means of the local device 10, i.e. open or close the gate 4 (or perform any other of action that the local device is configured to perform). If the user is not permitted to cause the local device 4, 6, 7 to perform the action, the central server 12 sends an action message M3 to the local server 10 indicating that the action should or must not be performed by the local device 4, 6, 7.

Based on the action message M3 sent by the central server 12, the local server 10 then controls the local device 10 to perform the requested action (step S140). Hence, if the user has permission to cause the local device 4, 6, 7 to perform the action, the action is performed, while, if the user is not permitted to cause the local device 4, 6, 7 to perform the action, the local server 10 controls the local device 4, 6, 7 to not perform the action.

Simultaneously to sending the action message M3 to the local server 10, or, alternatively, afterwards, the central server 12 sends (step S150) a permission message M2 indicating the result of the determination to the mobile device 11 and on the mobile device 11 it is indicated (S160) whether the action will be performed based on the result of the determination received in the permission message M2. Thus, if the user is permitted to cause the local device 4, 6, 7 to perform the action, the central server 12 sends a permission message M2 to the mobile device 11 indicating that the action will be performed by means of the local device 4, 6, 7 and the mobile device 11 indicates, e.g. by a message on the screen or vibration, that the action will be performed. If, however, the user is not permitted to cause the local device 4, 6, 7 to perform the action, the mobile device 11 receives a corresponding message and indicates this to the user. In this case, the central server 12 or the local server 10 can further send a message to a managing facility of a plant informing other personnel that a request by a user without permission has been made.

By implementing the method as laid out with regard to Figure 4, the identification of a user requesting an action to be performed by a local device 4, 6, 7 can be made more flexible, secure and less costly.

## Claims

1. Method for identifying a user of a local device (4, 6, 7), the method comprising the following steps:
reading (S100), by a mobile device (11), an identification code provided on or at the local device (4, 6, 7), wherein the local device (4, 6, 7) is configured to perform an action;
sending (S110), by the mobile device (11), a request message (M1) to a central server (12), wherein the request message includes at least user information, local device information and a request to perform an action by means of the local device (4, 6, 7);
determining (S120), by the central server (12), based on the request message (M1), whether the user is permitted to cause the local device (4, 6, 7) to perform the action;
sending (S130), from the central server (12), based on the result of the determination, an action message (M3) to a local server (10) configured for controlling the local device (4, 6, 7), wherein the action message (M2) indicates whether the user is permitted to cause the local device (4, 6, 7) to perform the action; and
controlling (S140), by the local server (10), the local device (4, 6, 7) to perform the action based on the action message (M3) sent by the central server (12).

2. Method according to claim 1, wherein the method further comprises:
sending (S150), by the central server (12) to the mobile device (11), a permission message (M2) indicating the result of the determination; and
indicating (S160), on the mobile device (11), whether the action will be performed based on the result of the determination received in the permission message (M3).

3. Method according to any of the preceding claims, wherein the user information includes one or more of the following: information about the user of the mobile device (11), information about a vehicle (2) operated by the user, information about the mobile device (11), information about the location of the mobile device (11).

4. Method according to any of the preceding claims, wherein the device information includes one or more of the following: information about a type of the local device (4, 6, 7), information about a location of the local device (4, 6, 7), information about actions which the local device (4, 6, 7) is configured to perform.

5. Method according to any of the preceding claims, wherein the step of determining (S120) whether the user is permitted to cause the local device (4, 6, 7) to perform the action further includes:
comparing (S121), by the central server (12), the user information with a list of information about users that are permitted to cause the local device (4, 6, 7) to perform the action; and
determining (S122), based on the comparison, whether the user is permitted to cause the local device (4, 6, 7) to perform the action.

6. Method according to any of the preceding claims, wherein the code is read by means of a camera of the mobile device (11).

7. Method according to any of the preceding claims, wherein the local device (4, 6, 7) is or is part of or is assigned to one of the following: a gate (4), a scale (6), a filling station (7), in particular a filling station for filling a medium, in particular a fluid or liquified gas, into a mobile reservoir (1), in particular of vehicle (2).

8. Method according to claim 7, wherein the action is or comprises one of the following: opening or closing the gate (4), creating a weight bill indicating the weight of the vehicle (2) on the scale (6), starting or stopping the filling of the mobile reservoir (1) by the filling station (7).

9. Method for identifying a user of a local device (4, 6, 7), the method comprising the following steps executed by a central server (12):
receiving (S200) a request message (M1) from a mobile device (11), wherein the request message (M1) has been generated based on a reading of an identification code provided on or at a local device (4, 6, 7), wherein the request message (M1) includes at least user information, local device information and a request to cause the local device (4, 6, 7) to perform an action;
determining (S210), based on the request message (M1), whether the user is permitted to cause the local device (4, 6, 7) to perform the action; and
sending (S220), based on the result of the determination, an action message (M3) to a local server (10) for controlling the local device (4, 6, 7) to perform the action based on the sent action message (M3), wherein the action message (M3) indicates whether the user is permitted to cause the local device (4, 6, 7) to perform the action.

10. Method for identifying a user of a local device (4, 6, 7), the method comprising the following steps executed by a local server (10) configured for controlling a local device (4, 6, 7):
receiving (S300), from a central server (12), an action message (M2), indicating whether the user is permitted to cause the local device (4, 6, 7) to perform the action; and
controlling (S310) the local device (4, 6, 7) to perform the requested action, based on the action message (M3) sent by the central server (12).

11. Method for identifying a user of a local device (4, 6, 7), the method comprising the following steps executed by a mobile device (11):
reading (S400) an identification code provided on or at a local device (4, 6, 7), wherein the local device (4, 6, 7) is configured to perform an action;
sending (S410) a request message (M1) to a central server (12), wherein the request message (M1) includes at least user information, local device information and a request to perform an action by means of the local device (4, 6, 7).

12. Computing unit or computing system configured to perform the method according to any of the preceding claims.

13. Computer program that causes a computing unit or computing system to perform all of the steps of a method according to any one of claims 1 to 11 when executed on the computing unit or computing system.

14. Computer-readable storage medium on which the computer program code according to claim 13 is stored.

15. Production plant comprising a local server (10) and one or more local devices (4, 6, 7) connected to the local server (10), wherein the local server (10) is configured to perform the method of claim 10, wherein the one or each of the one or more local devices (4, 6, 7) is configured to perform an action, and wherein a unique identification code configured to be read by a mobile device (11) is provided on or at the one or each of the more local devices (4, 6, 7).
